# EUROPÄISCHE PATENTANMELDUNG

(11) **EP 3 006 863 A1**
(43) Veröffentlichungstag der Anmeldung: **13.04.2016**
(21) Anmeldenummer: 15187418.7
(22) Anmeldetag: 29.09.2015
(51) Int. Cl.: F25B 25/00, F24F 13/22, F25D 11/02, F25D 21/14

(54) **INTEGRIERTES KÜHL-/KLIMAAGGREGAT**

(30) Priorität: 06.10.2014 DE 202014104789 U
(71) Anmelder: Truma Gerätetechnik GmbH & Co. KG, 85640 Putzbrunn (DE)
(72) Erfinder: Venschott, Mathias, 81825 München (DE); Wegmann, Philipp, 81541 München (DE)
(74) Vertreter: Prinz & Partner mbB

(57) **Zusammenfassung**

Die Erfindung betrifft ein integriertes Kühl-/Klimaaggregat mit einem Kältemittelkreislauf, der einen Kompressor, einen Verdampfer und einen Kondensator aufweist, und einem Absorptions-Kühlkreislauf, der einen Absorber, einen Verdampfer, einen Kondensator und einen Austreiber aufweist, wobei ein Kondenswassersammler (91) vorgesehen ist, der Kondenswasser am Verdampfer (90) des Kältemittelkreislaufs auffängt und zu einem Wärmeabgabeelement (92) des Absorptions-Kühlmittelkreislaufs leitet.

## Beschreibung

Die Erfindung betrifft ein integriertes Kühl-/Klimaaggregat.

Aus dem Stand der Technik sind Kühlschränke bekannt, die einen Absorptions-Kühlkreislauf aufweisen. Der Vorteil eines solchen Kühlschranks gegenüber Kühlschränken, die einen Kompressor in einem Kältemittelkreislauf aufweisen, besteht darin, dass sie zum einen geräuscharm oder sogar geräuschlos betrieben werden können und zum anderen einen sehr geringen Stromverbrauch haben, wenn ein im Absorptions-Kühlkreislauf vorgesehener Austreiber mit Gas beheizt wird. Aus diesem Grund sind Absorptions-Kühlkreisläufe besonders für Kühlschränke beliebt, die in Caravans, Wohnmobilen oder an Bord von Segelyachten oder Motorbooten verwendet werden.

Der Nachteil eines Kühlschranks, der einen Absorptions-Kühlkreislauf aufweist, besteht allerdings darin, dass es nach dem Einschalten eine vergleichsweise lange Zeit braucht, bis der Kühlschrank auf die gewünschte Temperatur heruntergekühlt ist. Hinzu kommt, dass die Wirksamkeit eines Absorptions-Kühlkreislaufs mit steigender Umgebungstemperatur sinkt, da die Kühlwirkung der zur Wärmeabfuhr verwendeten Umgebungsluft sich verringert.

Die Aufgabe der Erfindung besteht darin, den bekannten Kühlschrank zu verbessern.

Zur Lösung dieser Aufgabe ist erfindungsgemäß ein integriertes Kühl-/Klimaaggregat mit einem Kältemittelkreislauf, der einen Kompressor, einen Verdampfer und einen Kondensator aufweist, und einem Absorptions-Kühlkreislauf vorgesehen, der einen Absorber, einen Verdampfer, einen Kondensator und einen Austreiber aufweist, wobei ein Kondenswassersammler vorgesehen ist, der Kondenswasser am Verdampfer des Kältemittelkreislaufs auffängt und zu einem Wärmeabgabeelement des Absorptions-Kühlmittelkreislaufs leitet. Die Erfindung beruht auf dem Grundgedanken, einen zweiten Kreislauf in das Aggregat zu integrieren, mit dem in bestimmten Betriebsphasen, beispielsweise wenn genügend elektrischer Strom zu Verfügung steht, eine hohe Kälteleistung bereitgestellt werden kann. Gleichzeitig kann das sich am Verdampfer bildende Kondenswasser aufgefangen und dafür verwendet werden, das Wärmeabgabeelement des Absorptions-Kühlmittelkreislaufs zu kühlen, so dass dessen Effizienz gesteigert wird.

Das Wärmeabgabeelement kann dabei der Kondensator selbst, ein Absorber oder allgemein eine Enthitzungsstrecke sein.

Vorzugsweise ist vorgesehen, dass der Kondenswassersammler das Kondenswasser gleichmäßig über das Wärmeabgabeelement verteilt. Auf diese Weise wird die Kühlwirkung des Kondenswassers maximal ausgenutzt.

Wenn das Wärmeabgabeelement ein Kondensator ist, kann dieser mit Rippen zur Vergrößerung der Oberfläche versehen sein und insbesondere als Rippenkondensator ausgeführt sein. Auf diese Weise wird eine große Fläche zum Wärmeübergang zur Umgebung und zum Wärmeaustausch mit dem Kondenswasser bereitgestellt.

Gemäß einer bevorzugten Ausführungsform der Erfindung weist das Kühl-/ Klimaaggregat ein Kühlfach auf, das vom Absorptions-Kühlmittelkreislauf gekühlt wird. Damit kann das Kühlfach, beispielsweise wenn das Kühl-/Klimaaggregat nach einer Stillstandsphase wieder in Betrieb genommen wird, sehr schnell heruntergekühlt werden, da der Kältemittelkreislauf eine größere Kälteleistung hat als der Absorptions-Kühlkreislauf.

Vorzugsweise ist eine Kühlluftführung vom Verdampfer zum Kühlfach vorgesehen. Indem die vom Kältemittelkreislauf erzeugte Kaltluft direkt in das Kühlfach geleitet wird, werden Wärmetauscherverluste vermieden.

Um die Kaltluft direkt in das Kühlfach zu leiten, dann vorgesehen sein, dass die Kühlluftführung eine gesteuerte Luftleitklappe aufweist. Mit dieser kann auf technisch einfache Weise ein Teil der vom Kältemittelkreislauf erzeugten Kaltluft abgezweigt werden.

Die Erfindung wird nachfolgend anhand einer Ausführungsform beschrieben, die in den beigefügten Zeichnungen dargestellt ist. In diesen zeigen:
- Figur 1 schematisch ein erfindungsgemäßes Kühl-/Klimaaggregat in einer Schnittansicht;
- Figur 2 das Aggregat von Figur 1 in einer schematischen perspektivischen Ansicht;
- Figur 3 in einer schematischen Schnittansicht einen Teil des Kühl-/Klimaaggregats von Figur 1; und

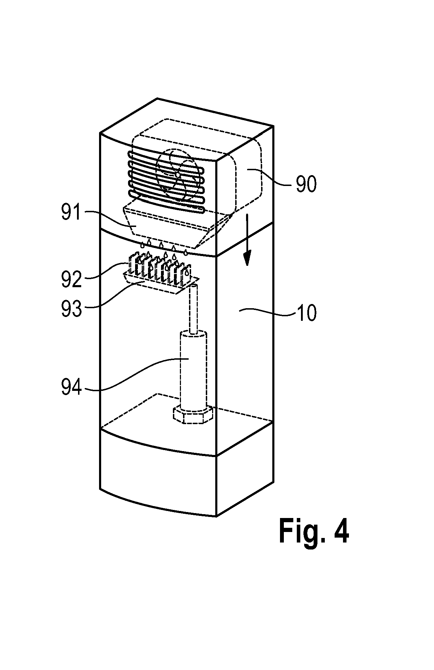

- Figur 4 in einer schematischen perspektivischen Ansicht die Rückseite des Kühl-/Klimaaggregats von Figur 1.

In den Figuren ist schematisch ein Kühl-/Klimaaggregat gezeigt. Es dient grundsätzlich dazu, gekühlte (klimatisierte) Luft bereitzustellen und gleichzeitig die Funktionalität eines Kühlschranks zu bieten. Zu diesem Zweck sind zwei verschiedene Kühlkreise implementiert, nämlich ein Kältemittelkreislauf, mit dem gekühlte Luft bereitgestellt werden kann, und ein Absorptions-Kühlkreislauf 18, mit dem der Kühlschrank gekühlt werden kann.

Das Kühl-/Klimaaggregat weist einen schematisch dargestellten Rahmen 10 auf, in dem ein Kühlfach 12 montiert ist. Das Kühlfach 12 ist gegenüber der Umgebung isoliert und von einer Vorderseite über eine Tür 14 aus zugänglich. Das Kühlfach 12 entspricht hinsichtlich seiner Funktionalität einem Kühlschrank.

Das Kühl-/Klimaaggregat weist zwei Technikräume 16, 26 auf, in denen verschiedene Komponenten der Kühlkreise untergebracht sind.

Der Absorptions-Kühlkreislauf ist insbesondere ein herkömmlicher Absorptions-Kühlkreislauf, wie er von Kühlschränken bekannt ist, die in Campern, Wohnmobilen, Hotelkühlschränken oder Segelyachten verwendet werden. Ein in diesem Absorptions-Kühlkreislauf verwendeter Austreiber AT kann insbesondere mit Gas oder auch mit Strom beheizt werden. Die Zuluft für einen Wärmetauscher 20 des Absorptions-Kühlkreislaufs 18 wird hier über einen Zuluftkanal 22 zugeführt, und die Abluft kann das Aggregat über einen Abluftkanal 24 verlassen.

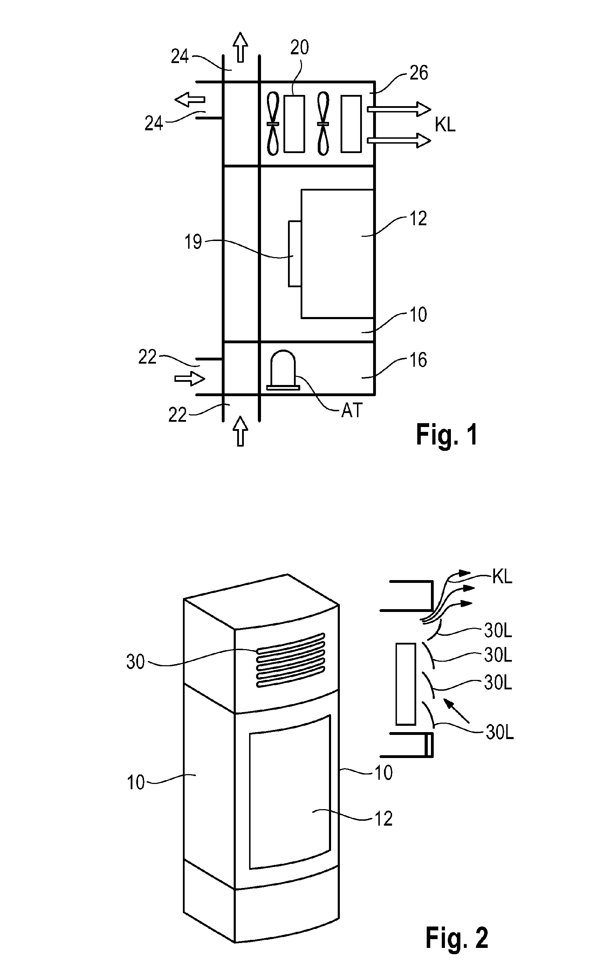

In Figur 1 ist weiterhin zu sehen, dass die verschiedenen Komponenten des Absorptions-Kühlkreislaufs und des Kältemittelkreislaufs abhängig von der Einbausituation und dem zur Verfügung stehenden Stauraum flexibel auf die beiden Technikräume 16, 26 aufgeteilt werden können. Bei der Ausführungsform gemäß Figur 1 findet sich lediglich der Austreiber AT im ersten Technikraum 16, während alle anderen Komponenten im zweiten Technikraum 26 angeordnet sind.

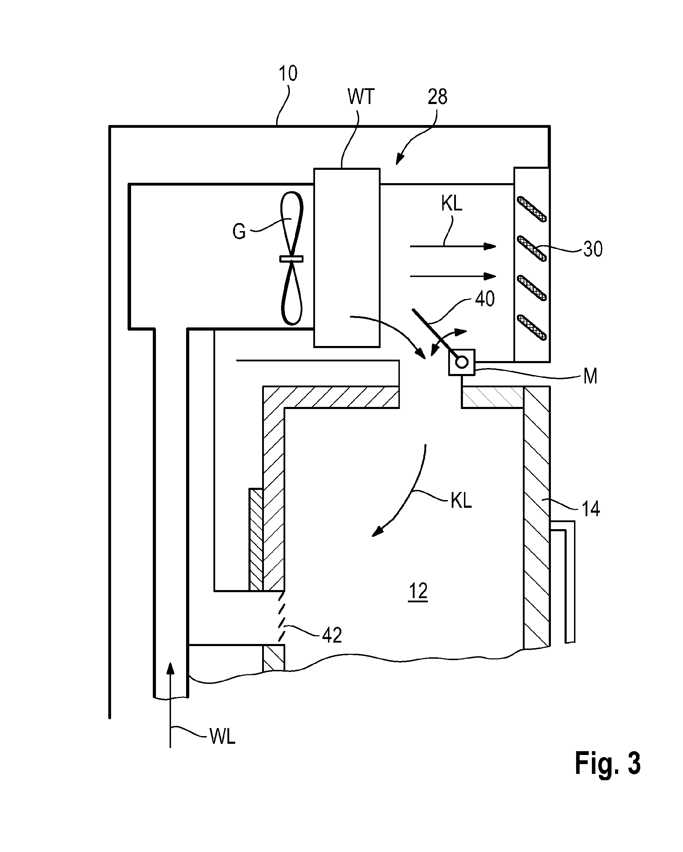

Der Kältemittelkreislauf weist einen Kompressor, ein Drosselorgan, zwei Wärmeübertrager (den Verdampfer, nachfolgend auch Wärmetauscher genannt, und den Verflüssiger) auf, sodass die Funktion einer Klimaanlage verwirklicht werden kann, mit der ein gekühlter Luftstrom bereitgestellt werden kann. Dieser Luftstrom kann unmittelbar aus dem zweiten Technikraum 26 an die Umgebung abgegeben werden, insbesondere durch eine Blende 30 (siehe auch die Figuren 2 und 3) hindurch, die den Technikraum 26 an der Vorderseite des Aggregats abdeckt.

Der Luftstrom, der zum Abführen der Abwärme des Kältemittelkreislaufs nötig ist, kann über den Zuluftkanal 22 zugeführt und den Abluftkanal 24 abgeführt werden. Zu diesem Zweck ist eine geeignete Luftführung vom Zuluftkanal 22 durch die entsprechenden Komponenten des Absorptions-Kühlkreislaufs hindurch vorhanden, an der Rückseite des Aggregats nach oben und durch den zweiten Technikraum 26 hindurch zum Abluftkanal 24.

Die Details der Führung der Zuluft sind dabei nicht relevant; wie in Figur 1 angedeutet ist, können der Zuluftkanal 22 und der Abluftkanal 24 in Abhängigkeit von der jeweiligen Einbausituation vertikal oder horizontal ausgerichtet werden können.

Die vom Kältemittelkreislauf 28 zu kühlende Luft kann entweder über den Zuluftkanal 22, wenn nur eine Zuführung von Frischluft gewünscht ist, oder eine separate Ansaugöffnung angesaugt werden. Dabei kann die Ansaugöffnung je nach gewünschter Betriebsart entweder aus demselben Raum ansaugen, in den auch die gekühlte Luft ausgeblasen wird, oder aus einem anderen Raum hinter der Rückseite des Aggregats, insbesondere Frischluft.

Die vom Kältemittelkreislauf bereitgestellte, gekühlte Luft kann nicht nur zur Klimatisierung des Innenraums eines Wohnmobils etc. verwendet werden, sondern auch unmittelbar in das Kühlfach 12 eingeleitet werden kann, wie in Figur 3 im Detail dargestellt ist.

In Figur 3 sind der Wärmetauscher und das Gebläse des Kältemittelkreislaufs zu sehen. Im Wärmetauscher WT kann einem angesaugten Warmluftstrom WL Wärme entzogen werden, sodass der Luftstrom als Kaltluft KL durch die Blende 30 hindurch an die Umgebung des Aggregats abgegeben werden kann.

Stromabwärts des Wärmetauschers WT ist eine steuerbare Klappe 40 vorgesehen, die einen Teil des Kaltluftstroms KL aus dem Luftkanal stromabwärts des Wärmetauschers WT abzweigen und unmittelbar in das Kühlfach 12 einleiten kann. Aus dem Kühlfach 12 tritt der Kaltluftstrom KL über eine Austrittsöffnung 42 aus, die beispielsweise mit selbstöffnenden Rückschlagklappen versehen sein kann, und gelangt wieder auf die Warmluftseite des Wärmetauschers WT.

Alternativ kann die Luft aus dem Kühlfach auch direkt nach außen abgegeben werden oder hin zur Verflüssigerabluft.

Die Steuerklappe 40 kann von einem Motor M zwischen einer geschlossenen Stellung, in der keine Kaltluft KL in das Kühlfach 12 umgeleitet wird, und einer mehr oder weniger geöffneten Stellung verstellt werden. Auf diese Weise kann gesteuert werden, ob und gegebenenfalls wie viel Kaltluft KL in das Kühlfach 12 umgeleitet wird.

Bei maximaler Leistung des Kältemittelkreislaufs 28 und maximal geöffneter Steuerklappe 40 wird das Kühlfach 12 mit einem großem Volumenstrom an Kaltluft KL versorgt und dementsprechend schnell gekühlt. Dies ist insbesondere dann vorteilhaft, wenn das Aggregat in Betrieb genommen wird; der Absorptions-Kühlkreislauf benötigt nach dem Einschalten einige Zeit, um über einen Wärmeübertrager 19 des Absorptions-Kühlkreislaufs das Kühlfach 12 zu kühlen.

Ein besonderes Merkmal des beschriebenen Kühl-/Klimaaggregats besteht darin, dass das Kondenswasser, welches sich am Verdampfer 90 des Kältemittelkreislaufs bildet, in einem Sammler 91 aufgefangen und dann gleichmäßig verteilt über den Kondensator 92 des Absorption-Kühlkreislauf geleitet wird. Auf diese Weise wird der Kondensator 92 gekühlt, so dass die Wärmeübertragung vom Absorption-Kühlkreislauf zur Umgebung verbessert wird. Soweit das Kondenswasser nicht am Kondensator 92 verdunstet, wird es in einer Auffangwanne 93 aufgefangen und durch einen Ablauf 94 abgeleitet.

Auch wenn im beschriebenen Ausführungsbeispiel als Wärmeabgabeelement des Absorptions-Kühlmittelkreislaufs ein Kondensator beschrieben ist, kann dasselbe Prinzip auch verwendet werden, um das Kondenswasser zum Absorber des Absorptionsmittelkreislaufs oder zu einer Enthitzungsstrecke zu leiten.

Das beschriebene Aggregat ist besonders geeignet zum Einbau in Caravans, Wohnmobile oder Segelyachten. Bei der mit der Kaltluft KL zu klimatisierenden Umgebung handelt es sich dann um den Innenraum oder Wohnraum bzw. die Kabine. Das Kühlfach 12 ist Teil eines üblichen Kühlschranks, in dem Lebensmittelvorräte gekühlt gelagert werden.

## Patentansprüche

1. Integriertes Kühl-/Klimaaggregat mit einem Kältemittelkreislauf (28), der einen Kompressor, einen Verdampfer und einen Kondensator aufweist, und einem Absorptions-Kühlkreislauf (18), der einen Absorber, einen Verdampfer, einen Kondensator und einen Austreiber aufweist, wobei ein Kondenswassersammler vorgesehen ist, der Kondenswasser am Verdampfer des Kältemittelkreislaufs auffängt und zu einem Wärmeabgabeelement des Absorptions-Kühlmittelkreislaufs leitet.

2. Kühl-/Klimaaggregat nach Anspruch 1, **dadurch gekennzeichnet, dass** der Kondenswassersammler das Kondenswasser gleichmäßig über das Wärmeabgabeelement verteilt.

3. Kühl-/Klimaaggregat nach Anspruch 1 oder Anspruch 2, **dadurch gekennzeichnet, dass** das Wärmeabgabeelement ein Kondensator ist.

4. Kühl-/Klimaaggregat nach Anspruch 3, **dadurch gekennzeichnet, dass** der Kondensator mit Rippen zur Vergrößerung der Oberfläche versehen ist.

5. Kühl-/Klimaaggregat nach einem der Ansprüche 1 und 2, **dadurch gekennzeichnet, dass** das Wärmeabgabeelement ein Absorber ist.

6. Kühl-/Klimaaggregat nach einem der Ansprüche 1 und 2, **dadurch gekennzeichnet, dass** das Wärmeabgabeelement eine Enthitzungsstrecke ist.

7. Kühl-/Klimaaggregat nach einem der vorhergehenden Ansprüche, **dadurch gekennzeichnet, dass** es ein Kühlfach aufweist, das vom Absorptions-Kühlmittelkreislauf gekühlt wird.

8. Kühl-/Klimaaggregat nach Anspruch 7, **dadurch gekennzeichnet, dass** eine Kühlluftführung vom Verdampfer zum Kühlfach vorgesehen ist.

9. Kühl-/Klimaaggregat nach Anspruch 8, **dadurch gekennzeichnet, dass** die Kühlluftführung eine gesteuerte Luftleitklappe aufweist.
